# EUROPÄISCHE PATENTANMELDUNG

(11) **EP 2 333 633 A2**
(43) Veröffentlichungstag der Anmeldung: **15.06.2011**
(21) Anmeldenummer: 10194054.2
(22) Anmeldetag: 07.12.2010
(51) Int. Cl.: G05D 23/19

(54) **Mehrkanalsteuerung für Stellelemente**

(30) Priorität: 11.12.2009 DE 202009016756 U
(71) Anmelder: Deltron Elektronische Systeme GmbH, 99994 Schlotheim (DE)
(72) Erfinder: Trautmann, Roland Dipl.-Ing., 99974 Ammern (DE); Poppe, Detlef Dipl.-Ing., 99994 Mühlhausen (DE); Früh, Arndt, 99713 Abtsbessingen (DE)
(74) Vertreter: WSL Patentanwälte

(57) **Zusammenfassung**

Die vorliegende Erfindung betrifft eine Mehrkanalsteuerung mit einem Prozessor (1), der mindestens einen ersten Eingang für den Empfang von Eingabeparametern und zumindest zwei Ausgänge für zwei Steuerkanäle (6) aufweist, wobei jeder Steuerkanal (6) unabhängig voneinander ansteuerbar ist und ein spannungsabhängiges Stellelement (5) aufweist. Um eine Mehrkanalsteuerung zum gleichzeitigen, kurzschlussfesten Betrieb von Stellelementen mit gegebenenfalls unterschiedlichen Nennspannungen, sowie ein Verfahren zum kurzschlussfesten Betrieb einer solchen Mehrkanalsteuerung bereitzustellen., wird erfindungsgemäß vorgeschlagen, daß die Stellelemente (5) unabhängig voneinander mit Spannung versorgt und/oder überwacht werden.

## Beschreibung

Die vorliegende Erfindung betrifft eine Mehrkanalsteuerung mit einem Prozessor, der mindestens einen ersten Eingang für den Empfang von Eingabeparametern und zumindest zwei Ausgänge für zwei Steuerkanäle aufweist, wobei jeder Steuerkanal unabhängig voneinander ansteuerbar ist und ein spannungsabhängiges Stellelement aufweist.

Weiter betrifft die vorliegende Erfindung Verfahren zur Ansteuerung von Stellelementen mit der oben genannten Mehrkanalsteuerung.

Bekannte Mehrkanalsteuerungen aus dem Stand der Technik weisen zumeist einen Empfänger, einen Prozessor und mehrere Steuerkanäle auf. In jedem Steuerkanal ist ein Stellelement angeordnet, welches von dem Prozessor angesteuert werden kann. Durch die zumeist fest verdrahtete Energieversorgung ist die Spannung für alle Steuerkanäle festgelegt. Dies hat zur Folge, dass in allen Steuerkanälen baugleiche Stellelemente verwendet werden müssen, deren Nennspannung der Spannung der Energieversorgung entspricht. Stellt die Energieversorgung die Netzspannung bereit und weicht diese von der Nennspannung der Stellelemente ab, so kann der Mehrkanalsteuerung ein Transformator vorgeschaltet werden, der die Netzspannung auf die erforderliche Nennspannung der Stellelemente umwandelt. Ein solcher Transformator, der typischer Weise im Leistungsbereich von 50VA ausgelegt ist, hat einen ständigen Leerlaufverbrauch. Bedingt durch den Leerlaufverbrauch weist eine herkömmliche Mehrkanalsteuerung erhöhte Betriebskosten auf.

Ein weiterer Nachteil ist, dass der einzige Schutz vor Schäden bei einem Kurzschluss durch eine Schmelzsicherung gegeben ist, die jedoch möglicherweise nicht in allen Fällen ausreicht, um gerade bei hohen Kurzschlussströmen einen wirksamen Schutz für die elektronischen Bauteile zu gewährleisten. Dies ist insbesondere dann der Fall, wenn ein sog. Triode Alternating Current Switch, kurz Triac, in den jeweiligen Steuerkanälen angeordnet ist.

Aus dem Stand der Technik ist weiter bekannt, dass alternativ zu einem Transformator ein Schaltnetzteil verwendet werden kann, um die Nennspannung der Stellelemente aus der Netzspannung zu gewinnen. Werden die Steuerkanäle mit Hilfe von Transistoren angesteuert, deren Strom zentral überwacht bzw. begrenzt wird, reicht dies oftmals nicht aus, um Defekte schnell und zuverlässig zu erkennen, so dass der Schaltkreis nicht ausreichend vor einer Beschädigung geschützt ist. Bei der Verwendung von Funkempfängern zur Übertragung von Eingabeparametern und gleichzeitiger Nutzung eines leistungsstarken Schaltnetzteils ist ein hoher Entstöraufwand notwendig, der zu hohen Installations- und Betriebskosten führt.

Durch die Vorgabe, dass alle Stellelemente baugleich bzw. für die gleiche Nennspannung ausgelegt sein müssen, wird eine flexible und vielfältige Nutzung von herkömmlichen Mehrkanalsteuerungen eingeschränkt.

Vor dem beschriebenen Hintergrund ist es Aufgabe der vorliegenden Erfindung, eine Mehrkanalsteuerung zum gleichzeitigen, kurzschlussfesten Betrieb von Stellelementen mit gegebenenfalls unterschiedlichen Nennspannungen, sowie ein Verfahren zum kurzschlussfesten Betrieb einer solchen Mehrkanalsteuerung bereitzustellen.

Hinsichtlich der Vorrichtung wird diese Aufgabe erfindungsgemäß dadurch gelöst, dass die Stellelemente unabhängig voneinander mit Spannung versorgt und/oder überwacht werden.

Bezüglich des Verfahrens wird die Aufgabe erfindungsgemäß dadurch gelöst, dass in jedem Steuerkanal der Strom und die Spannung überwacht werden, so dass Störungen in den Steuerkanälen erkannt und entsprechend reagiert werden kann.

Mit anderen Worten werden die Steuerkanäle je nach den für die Stellelemente erforderlichen Nennspannungen mit einer entsprechenden Energieversorgung elektrisch verbunden. Weil die Anbindung eines Steuerkanals an die Energieversorgung von der Anbindung anderer Steuerkanäle unabhängig ist, können, wenn die Energieversorgung unterschiedliche Spannungen bereitstellt, die Steuerkanäle und somit die Stellelemente mit einer unterschiedlichen unabhängigen Spannung beaufschlagt werden. Durch eine Überwachung der einzelnen Steuerkanäle ist es möglich, Defekte bzw. Störungen innerhalb jeden Steuerkanals zu erkennen und darauf zu reagieren, bevor andere Steuerkanäle beschädigt werden. Dadurch kann unter Anderem ein kompletter Systemausfall verhindert werden. Des Weiteren kann ein möglicher Schaden auf einen Steuerkanal begrenzt werden und so die etwaigen Reparaturkosten gesenkt werden.

Zur Steuerung der Spannung der Stellelemente ist es vorteilhaft, wenn gemäß einer Ausführungsform mindestens ein Steuerkanal ein Triac aufweist. Da ein Triac sowohl die positive als auch die negative Halbwelle einer Wechselspannung steuern kann, ist es möglich sowohl die Stromstärke als auch die Spannung für nachgeschaltete Bauelemente, beispielsweise Stellelemente, zu beeinflussen. Für die erfindungsgemäße Verwendung des Triacs ist es notwendig, dass er für hohe Kurzschlussströme und hohe Leerlaufspannungen ausgelegt ist. Dies ist bei gängigen Triacs, beispielsweise für 600V/16A der Fall, wobei wegen der erfindungsgemäßen Abschaltung im Kurzschlussfall auf eine Kühlung der Triacs verzichtet werden kann.

Eine Ausführungsform weist einen Transformator auf, der mit einer externen Energieversorgung elektrisch verbunden ist und die vorbestimmten Nennspannungen der Stellelemente bereitstellt. Mit anderen Worten weist der Transformator sekundärseitig mehrere Nennspannungen auf, die an entsprechenden Abgriffen bereitgestellt werden. Im Folgenden wird dieser Transformator auch als Haupttransformator bezeichnet. Vorteilhaft ist auch, dass der magnetische Innenwiderstand des Transformators zur primären Strombegrenzung verwendet werden kann, insbesondere bei einem Kanalkurzschluss wird der Strom durch den Innenwiderstand des Transformators begrenzt. Ein weiterer Vorteil bei der Verwendung eines Transformators ist, dass der Transformator galvanisch von der Netzspannung getrennt ist und so die Sicherheit erhöht wird.

Als Stellelemente können insbesondere Dehnstoffelemente eingesetzt werden. Allerdings sind auch andere Stellelemente, beispielsweise Schalter, Ventile, Magnete oder sonstige elektrische Aktuatoren denkbar. Dehnstoffelemente sind Aktoren, bei denen eine Änderung eines Stellweges proportional zu einer temperaturabhängigen Volumen- bzw. Längenänderung eines Dehnstoffes ist. Insbesondere werden solche Dehnstoffelemente als Thermostate an Heizkörpern zur Regelung der Wärmeleistung verwendet. Durch die temperaturabhängige Volumen- bzw. Längenänderung des Dehnstoffes wird der Stellweg eines Ventils und damit der Warmwasserzulauf des Heizkörpers geregelt. In Verbindung mit Fußbodenheizungen sind die Dehnstoffelemente aus praktischen Gründen zentral angeordnet, dies hat jedoch den Nachteil, dass die Temperatur am Ort des Stellelementes nicht immer mit der zusteuernden Raumtemperatur korreliert. Mit einer Mehrkanalsteuerung können Dehnstoffelemente verschiedener Steuerkanäle angesteuert und so die Temperatur mehrer Regelkreise, beispielsweise Heizkreisläufe einer Fußbodenheizung, unabhängig beeinflusst werden.

Zur Erhöhung der Flexibilität ist in einer Ausführungsform zumindest ein Stellelement mit einem Schaltelement mit der Nennspannung verbindbar. Neben einer generellen Ein- und Ausschaltmöglichkeit für den Steuerkanal bietet dies den Vorteil, dass beispielsweise bei Austausch des Stellelementes der Anschluss mit der Nennspannung über ein Schaltelement leicht realisierbar ist. Des Weiteren ist ein Austausch von Stellelementen mit unterschiedlichen Nennspannungen möglich.

In einer Ausführungsform stellt der Transformator an sekundärseitigen Abgriffen mehrere Nennspannungen bereit, wobei mindestens ein Steuerkanal über das Schaltelement mit den sekundärseitigen Abgriffen des Transformators umschaltbar verbunden ist. Bevorzugt werden sekundärseitig zwei Wechselspannungen mit 24V und 230V bereitgestellt. Vorteilhaft ist dabei, dass so in einem Steuerkanal ein Stellelement mit einer Nennspannung von 24Vac durch ein Stellelement mit einer Nennspannung von 230Vac unkompliziert ausgetauscht werden kann.

Vorgesehen ist auch, dass in einer Ausführungsform zumindest ein Stellelement mit einer lösbaren Steckverbindung an die Nennspannung angeschlossen ist.

Eine Senkung der Betriebskosten bei gleichzeitiger Erhaltung der Leistung kann erfindungsgemäß erreicht werden, wenn in einer Ausführungsform ein zusätzlicher Transformator, sog. Standby-Transformator, zur Bereitstellung eines Ruhestromes für die Steuerelektronik vorgesehen ist. So kann in Phasen, in denen kein Stellelement geschaltet werden muss um Leerlaufverluste zu vermeiden, der Haupttransformator ausgeschaltet werden. Sobald von der Steuerelektronik, beispielsweise dem Prozessor, erkannt wird, dass ein Schaltungsbedarf und damit ein erhöhter Steuerleistungsbedarf vorliegt, kann der Haupttransformator wieder eingeschaltet werden. Dabei ist es vorgesehen, dass der Standby-Transformator für niedrige Leerlaufverluste optimiert ist.

Für die Überwachung der einzelnen Steuerkanäle ist zumindest in einem Steuerkanal ein Messwiderstand vorgesehen, der zur Messung des Stromflusses in Reihe mit dem Triac angeordnet ist und derart ausgestaltet ist, dass der Messwert an den Prozessor übermittelbar ist, wobei der Messwiderstand einen elektrischen Widerstand von bevorzugt ≤ 0,1 Ω hat. Denkbar ist auch eine Verwendung von davon abweichenden elektrischen Widerständen, die an dieser Stelle nicht ausgeschlossen werden sollen.

In einer weiteren Ausführungsform ist zumindest in einem Steuerkanal ein Spannungsteiler zur Messung des Spannungsabfalls über dem Triac vorgesehen, der derart ausgestaltet ist, dass der Messwert an den Prozessor übermittelbar ist.

Es versteht sich, dass alle Messwerte dem korrespondierenden Steuerkanal bzw. dem Messort zugeordnet werden können. Dies kann beispielsweise durch eine Hard- oder Softwarelösung realisiert sein. Eine Hardwarelösung sieht die feste Zuordnung von Messkanälen vor, während mit einer Softwarelösung eine Kodierung des Messsignals denkbar ist.

Um den Transformator vor einer Beschädigung, beispielsweise durch Überhitzung, zu schützen ist es in einer Ausführungsform vorteilhaft, wenn für den Transformator ein Überlastschutz, insbesondere ein thermisches Schutzelement, vorgesehen ist. Natürlich ist es auch denkbar zur Überwachung der Transformatortemperatur einen PTC, NTC, Bimetallschalter, eine Thermosicherung oder andere auf Temperaturänderungen reagierende Bauelemente zu verwenden. Auch eine Kombination aus den genannten Bauelementen kann als Überlastschutz verwendet werden. Wenn alle Steuerfunktionen und die Stellelementverwaltung in einem Prozessor bzw. Mikrocontroller konzentriert sind, muss der Prozessor entsprechend viele Anschlusspins aufweisen. Beispielsweise sind in einer Ausführungsform pro Steuerkanal, ohne Berücksichtigung kanalweise zugeordneter Bedien- und Anzeigelemente, wenigstens drei Pins erforderlich. Daher haben in der praktischen Realisierung die Leiterplatten zur Stellelementansteuerung ein großes Länge-zu-Breite-Verhältnis, dass mit der Anzahl der vorgesehenen Steuerkanäle ansteigt. Zu Berücksichtigen ist dabei jedoch, dass mit der Anzahl der Steuerkanäle auch die Anzahl der elektrischen Leitungen und damit das Risiko von Störungseinkopplungen aus dem Leistungsteil ansteigt.

Diese kann vermieden werden, indem in einer erfindungsgemäßen Ausführungsform für eine Gruppe von ≥ 2 Stellelementen ein zusätzlicher Prozessor, ein sog. Kanalprozessor, in der Mehrkanalsteuerung vorgesehen und der derart ausgestaltet ist, dass die Prozessteuerung und die Stellelementverwaltung zwischen Prozessor und Kanalprozessor aufgeteilt ist, wobei für die Kommunikation zwischen den Prozessoren vorzugsweise ein serieller Datenbus vorgesehen ist.

Werden die Kanalprozessoren auf der Leiterplatten räumlich dicht an den jeweiligen Steuerkanälen angeordnet und sind die Kanalprozessoren mit dem Hauptprozessor über einen internen Datenbus verbunden, so hilft dies die Anzahl der Leiterbahnen sowie die Länge der einzelnen Leiterbahnen zu reduzieren und Störeinkopplungen zu vermeiden.

Weiter ist nicht davon auszugehen, dass in verschiedenen Anwendungs- und Installationsfällen die Anzahl der Steuerkanäle identisch sind. Als Folge sind in diesen Fällen eine anwendungsabhängige Anzahl von Steuerkanälen nicht belegt.

Denkbar ist hier, dass je eine Gruppe aus Steuerkanälen und Kanalprozessor als Modul ausgebildet und abhängig von der Anzahl der erforderlichen Steuerkanäle zu einer Mehrkanalsteuerung aufgebaut werden kann. Neben der Reduzierung der Materialkosten wird so auch der Raumbedarf optimiert.

Sind geringe Betriebsströme in einem Steuerkanal zu erwarten, ist es von Vorteil, wenn in einer weiteren Ausführungsform, insbesondere bei Hochvolt-Dehnstoffelementen, zur Erhöhung der Stromstärke ein Verstärkerelement vor dem jeweiligen Prozessoreingang angeordnet ist.

In einer Ausführungsform kann ein Verfahren zum Schutz vor Beschädigung von Bauteilen und zur Erhöhung der Betriebssicherheit eingesetzt werden, indem Verfahren zumindest in einem Steuerkanal der Strom Spannung überwacht wird, um so einen Defekt zu erkennen und den Transformator bei einer vorbestimmten Störung abschalten zu können.

In einer weiteren Ausgestaltung kann zusätzlich die Spannung in zumindest einem Steuerkanal überwacht werden, um etwaige Defekte genauer identifizieren zu können.

Ist beispielsweise bei Verwendung eines Dehnstoffelementes und einem Triac an dem betreffenden Steuerkanal weder Strom noch Spannung vorhanden, so ist der Kanal nicht beschaltet bzw. es liegt eine Stromkreisunterbrechung vor. Wenn ein Steuerkanal dauerhaft ein solches Verhalten zeigt, kann dieser im Abarbeitungszyklus der Steuerung übergangen werden. Bei einem nicht gezündeten Triac fließt kein Strom über das Dehnstoffelement und die maximale sekundäre Transformatorspannung ist messbar. Ein Vergleich zwischen der maximalen sekundären Transformatorspannung und der für den jeweiligen Steuerkanal geforderten Nennspannung des Dehnstoffelementes ermöglicht etwaige Fehler in der Beschaltung festzustellen. Weiter kann auf Grundlage der maximalen sekundären Transformatorspannung, die im Idealfall der Nennspannung entspricht, die Steuerung abhängig von der Dehnstoffelementspannung unterschiedliche Grenzen für Ströme und Aufheizzeiten verwenden.

In einer weiteren Ausgestaltung des erfindungsgemäßen Verfahrens, wird zumindest in einem Steuerkanal die Stromstärke gemessen, um so den Stellvorgang des Stellelementes zu überwachen, sodass bei Vorliegen eines Kurzschlusses der betroffene Steuerkanal und/oder der Transformator abgeschaltet wird. Beispielsweise ist bei Verwendung eines Dehnstoffelementes und einem Triac in einem Steuerkanal ein defekter Triac daran zu erkennen, dass bei fehlender Zündung ein Strom fließt. Die Steuerung kann dann durch primärseitige Abschaltung des Transformators und/oder Abschaltung des betroffenen Steuerkanals reagieren.

Es ist weiter von Vorteil, wenn in einer Ausführungsform zumindest in einem Steuerkanal die Stromstärke gemessen wird, um festzustellen, ob die Stromstärke des Betriebsstromes des Stellelementes nach einer vorbestimmten Stellzeitdauer einen vorbestimmten Wert aufweist, um so bei einer außerhalb einer vorbestimmten Toleranz liegenden Abweichung den betroffenen Steuerkanal und/oder den Transformator abzuschalten.

Beispielsweise liegt bei Verwendung eines Dehnstoffelementes und einem Triac in einem Steuerkanal ein Kurzschluss vor, wenn der gemessene Strom zwischen der maximal zu erwartenden Einschaltspitze und dem sekundärseitigen Kurzschlussstrom des Transformators liegt. In einem solchen Fall kann nach Erkennen der Transformator und/oder der betroffene Steuerkanal abgeschaltet werden, bevor weitere Bauteile beschädigt werden. In anderen Fällen, bei denen der Strom nach einer angenommenen Aufheizzeit nicht auf den vorbestimmten Betriebsstromwert zurückgegangen ist, erfolgt ebenfalls die Abschaltung des betroffenen Steuerkanals.

Weitere Vorteile, Merkmale und Anwendungsmöglichkeiten der vorliegenden Erfindung werden deutlich anhand der folgenden Beschreibung von bevorzugten Ausführungsformen und den dazugehörigen Figuren. Es zeigen:
- Fig. 1:: einen schematischen Schaltplan einer Mehrkanalsteuerung aus dem Stand der Technik,
- Fig. 2:: einen schematischen Schaltplan einer erfindungsgemäßen Ausführungsform.

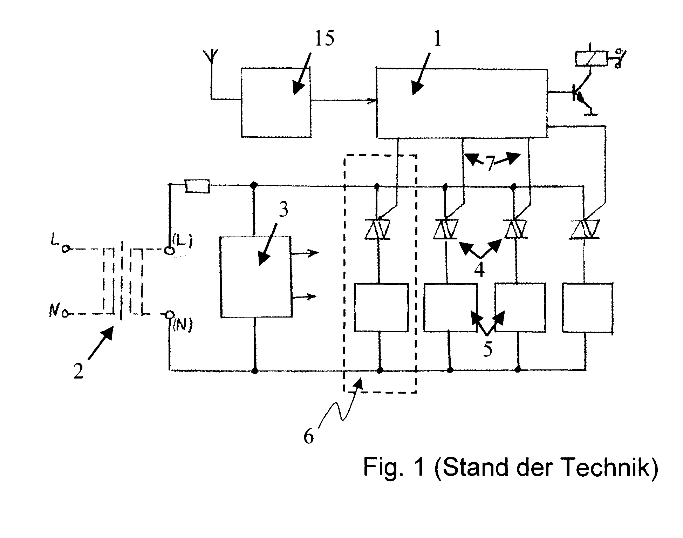

In Figur 1 ist ein schematischer Schaltplan einer Mehrkanalsteuerung aus dem Stand der Technik gezeigt. Ausgehend von einem Empfänger 15, hier ein Funkempfänger, werden Eingabeparameter, wie beispielsweise bei einer Heizungsanlage die Soll- bzw. Ist-Temperatur eines Messfühlers, über einen Eingang an den Prozessor 1 übermittelt. An einem Ausgang ist bei dieser Ausführungsform ein Relais 12 angeschlossen. Weiter sind an den Prozessor 1 mehrere Steuerkanäle 6 angeschlossen, wobei jeder Steuerkanal 6 einen Triac 4 aufweist, der mit einer Ansteuerungsleitung 7 mit dem Prozessor 1 verbunden ist. Ferner ist ein Stellelement 5, hier ein Dehnstoffelement, in Reihenschaltung zu dem Triac 4 angeordnet. Alle Steuerkanäle 6 sind als Parallelschaltung an eine interne Stromversorgung 3 angeschlossen, die ihrerseits über eine externe Energieversorgung 2, beispielsweise mit der Netzspannung, elektrisch versorgt wird. Nachteilig ist hierbei, dass alle Stellelemente 5 für die gleiche Nennspannung ausgelegt sein müssen und die einzelnen Steuerkanäle 6 nicht ausreichend vor einem Kurzschluss geschützt sind.

Für den Fall, dass die Netzspannung von der erforderlichen Nennspannung der Stellelemente 5 abweicht, ist ein Transformator 21 zur Anpassung der Spannung vorgesehen. Nachteilig ist jedoch dabei, dass der Transformator 21 einen ständigen Leerlaufverbrauch aufweist und damit hohe Betriebskosten verursacht.

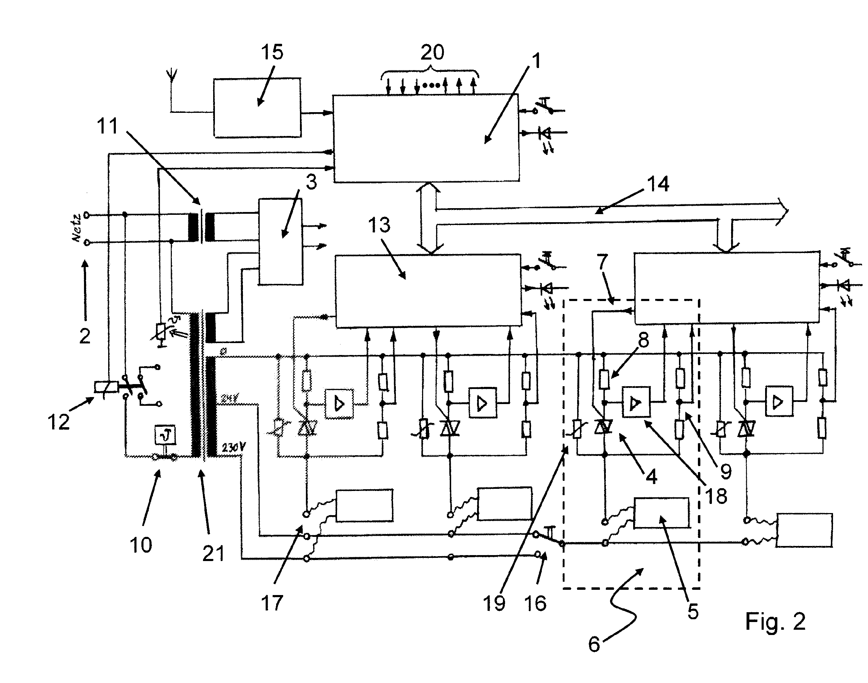

Eine erfindungsgemäße Ausführungsform der vorliegenden Erfindung ist in Figur 2 dargestellt, die einen schematischen Schaltplan zeigt. Eingabeparameter werden, beispielsweise von einem Empfänger 15, an den Prozessor 1 übermittelt, wobei hierzu der Empfänger 15 an einem ersten Eingang des Prozessors 1 angeschlossen ist. Der Prozessor 1 kann bei Bedarf weitere Ein- und Ausgänge 20 aufweisen. Wenigstens ein Ausgang ist für Ausgabeparameter vorgesehen, wobei in dem vorliegendem Beispiel der Ausgang mit einem Relais 12 verbunden ist, das unter anderem einen Transformator 21 ansteuern kann. Der Transformator 21 wandelt die Netzspannung in die erforderlichen Nennspannungen für die Stellelemente 5, aber auch für die interne Stromversorgung 3 um. Um den Transformator 21 vor einer Beschädigung durch Überhitzung zu schützen ist ein Überlastschutz 10, beispielsweise ein thermisches Schutzelement, vorgesehen.

Sind die Steuerkanäle 6 mit Hilfe des Transformators 21 galvanisch von der Netzspannung getrennt, so bewirkt der Innenwiderstand des Transformators im Kurzschlussfall eine Strombegrenzung, was den Kurzschluss wesentlich einfacher beherrschbar macht, wobei der Transformator außerdem eine Schutzisolation gegenüber der Netzspannung bereitstellt. Beispielsweise ist die Schutzbarriere bei der Verwendung einer Wechselspannung von 230V auf 4 kV ausgelegt. Ist es im Störfall erforderlich, kann der Transformator abgeschaltet und so der Stromkreis unterbrochen werden. Bei Verwendung eine Spannung von 24 Vac im Lastkreis hat man zusätzlich den Sicherheitsstatus der Sicherheitskleinspannung.

In Zeitperioden in denen kein Schaltvorgang durchgeführt werden muss, kann die interne Stromversorgung 3 mit einem zusätzlichen Transformator, einen sog. Standby-Transformator 11, an der Netzspannung angeschlossen werden. Der Transformator 21 kann in diesen Phasen abgeschaltet werden und wird bei Bedarf von dem Prozessor 1 und dem Relais 12 zugeschaltet. Dies hilft einen unnötigen Leerlaufverbrauch zu reduzieren.

Für die Verbindung des Prozessors 1 mit wenigstens einem zusätzlichen Prozessor, der hier als Kanalprozessor 13 bereitgestellt wird, ist ein serieller Bus 14 als interne Kommunikationsleitung vorgesehen.

Während der Prozessor 1 die Bearbeitung der allgemeinen Verwaltungsaufgaben übernimmt, steuern die Kanalprozessoren 13, die an diese angeschlossenen Steuerkanäle 6. Durch die Aufgabenteilung kann zum Einen der Stromverbrauch in Phasen ohne Steuerungsbedarf gesenkt werden und zum Anderen kann die Mehrkanalsteuerung in modularer Bauweise realisiert werden. Ein entsprechendes Modul weist einen Kanalprozessor 13 sowie daran angeschlossen eine Gruppe von Steuerkanälen 6 auf. Vorteilhaft ist, dass bei modularer Bauweise die Mehrkanalsteuerung leicht um weitere Steuerkanäle erweitert werden kann.

Ein Steuerkanal 6 weist ein Triac 4 auf, der mit einer Ansteuerungsleitung 7 an dem Kanalprozessor 13 angeschlossen ist. Mit dem Triac 4 kann der Strom über das in Reihe angeordnete Stellelement 5 gesteuert werden. Das Stellelement 5 ist hierzu über eine lösbare Steckverbindung 17 oder ein Schaltelement 16 an die erforderliche Messspannung angeschlossen.

Zusätzlich ist in einem Steuerkanal 6 ein Messwiderstand 8 zur Messung des durch den Triac 4 fließenden Stromes vorgesehen. Wird eine Stromstärke erwartet, deren Intensität kleiner als die Auflösungsgröße des Prozessors 13 ist, kann das Stromsignal mit einem Verstärker 18 skaliert werden.

Zum Schutz gegen Überspannungen kann in einem Steuerkanal 6 ein Varistor 19 in Parallelschaltung zu dem Triac 4 und dem Messwiderstand 8 angeordnet werden.

Der Spannungsabfall an dem Triac 4 wird mit einem Spannungsteiler 9 in mindestens einem Steuerkanal 6 erfasst und kanalaufgelöst an den Kanalprozessor 13 zur Überwachung der Betriebszustände übermittelt.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

### Bezugszeichenliste

- 1: Prozessor
- 2: Energieversorgung
- 3: interne Stromversorgung
- 4: Triac
- 5: Stellelement
- 6: Steuerkanal
- 7: Ansteuerungsleitung
- 8: Messwiderstand
- 9: Spannungsteiler
- 10: Überlastschutz
- 11: Standby-Transformator
- 12: Relais
- 13: Kanalprozessor
- 14: interner Bus
- 15: Empfänger
- 16: Schaltelement
- 17: lösbare Steckverbindung
- 18: Verstärker
- 19: Varistor
- 20: Ein- und Ausgänge

- 21: Transformator

## Patentansprüche

1. Mehrkanalsteuerung mit einem Prozessor (1), der mindestens einen ersten Eingang für den Empfang von Eingabeparametern und zumindest zwei Ausgänge für zwei Steuerkanäle (6) aufweist, wobei jeder Steuerkanal (6) unabhängig voneinander ansteuerbar ist und ein spannungsabhängiges Stellelement (5) aufweist, **dadurch gekennzeichnet, dass** die Stellelemente (5) unabhängig voneinander mit Spannung versorgt und/oder überwacht werden.

2. Mehrkanalsteuerung nach Anspruch 1, **dadurch gekennzeichnet, dass** das Stellelement (5) ein Dehnstoffelement ist.

3. Mehrkanalsteuerung nach Anspruch 1 oder 2 **dadurch gekennzeichnet, dass** mindestens ein Steuerkanal (6) einen Triode Alternating Current Switch (4), kurz Triac, aufweist.

4. Mehrkanalsteuerung nach einem der Ansprüche 1 bis 3, **dadurch gekennzeichnet, dass** ein Transformator (21) mit einer Energieversorgung (2) elektrisch verbunden ist und die vorbestimmten Nennspannungen der Stellelemente (5) bereitstellt.

5. Mehrkanalsteuerung nach einem der Ansprüche 1 bis 4, **dadurch gekennzeichnet, dass** zumindest ein Stellelement (5) über ein Schaltelement (16) mit der Nennspannung verbindbar ist.

6. Mehrkanalsteuerung nach einem der Ansprüche 1 bis 5, **dadurch gekennzeichnet, dass** der Transformator (21) an sekundärseitigen Abgriffen mehrere Nennspannungen, vorzugsweise zwei und insbesondere 24Vac und 230Vac, bereitstellt, wobei der Steuerkanal (6) über das Schaltelement (16) mit den sekundärseitigen Abgriffen des Transformators (21) umschaltbar verbunden ist.

7. Mehrkanalsteuerung nach einem der Ansprüche 1 bis 6, **dadurch gekennzeichnet, dass** zumindest ein Stellelement (5) über eine lösbare Steckverbindung (17) an die Nennspannung angeschlossen ist.

8. Mehrkanalsteuerung nach einem der Ansprüche 1 bis 7, **dadurch gekennzeichnet, dass** ein zusätzlicher Transformator (11), zur Bereitstellung eines Ruhestromes für die Steuerelektronik vorgesehen ist.

9. Mehrkanalsteuerung nach einem der Ansprüche 1 bis 8, **dadurch gekennzeichnet, dass** zumindest in einem Steuerkanal (6) ein Messwiderstand (8) vorgesehen ist, der zur Messung des Stromflusses in Reihe mit dem Triac (4) angeordnet und derart ausgestaltet ist, dass der Messwert an den Prozessor (1, 13) übermittelbar ist, wobei der Messwiderstand (8) bevorzugt ≤ 0,1 Ω ist.

10. Mehrkanalsteuerung nach einem der Ansprüche 1 bis 9, **dadurch gekennzeichnet, dass** zumindest in einem Steuerkanal (6) ein Spannungsteiler (9), zur Messung des Spannungsabfalls über dem Triac (4) vorgesehen ist und derart ausgestaltet ist, dass der Messwert an den Prozessor (1, 13) übermittelbar ist.

11. Mehrkanalsteuerung nach einem der Ansprüche 1 bis 10, **dadurch gekennzeichnet, dass** für den Transformator (21, 11) ein Überlastschutz (10), insbesondere ein thermisches Schutzelement, wie zum Beispiel eine Schmelzsicherung, vorgesehen ist.

12. Mehrkanalsteuerung nach einem der Ansprüche 1 bis 11, **dadurch gekennzeichnet, dass** für eine Gruppe von ≥ 2 Stellelementen (5) ein Kanalprozessor (13) vorgesehen ist, der derart ausgestaltet ist, dass die Prozessteuerung und die Stellelementverwaltung zwischen Prozessor (1) und Kanalprozessor (13) aufgeteilt ist, wobei für Kommunikation zwischen den Prozessoren (1, 13) vorzugsweise ein serieller Datenbus (14) vorgesehen ist.

13. Mehrkanalsteuerung nach einem der Ansprüche 1 bis 12, **dadurch gekennzeichnet, dass** zur Erhöhung von niedrigen Betriebsströmen, insbesondere bei Hochvolt-Dehnstoffelementen, ein Verstärkerelement (18) vor dem jeweiligen Prozessoreingang vorgesehen ist.

14. Verfahren zur Ansteuerung von Stellelementen mit einer Mehrkanalsteuerung nach einem der Ansprüche 1 bis 13, **dadurch gekennzeichnet, dass** zumindest in einem Steuerkanal (6) der Strom überwacht wird, um so einen Defekt zu erkennen und den Transformator (21, 11) bei einer vorbestimmten Störung abzuschalten.

15. Verfahren zur Steuerung von Stellelementen mit einer Mehrkanalsteuerung nach Anspruch 14, **dadurch gekennzeichnet, dass** zusätzlich in zumindest einem Steuerkanal die Spannung überwacht wird, um einen etwaigen Defekt gegebenenfalls genauer zu identifizieren.

16. Verfahren zur Ansteuerung von Stellelementen mit einer Mehrkanalsteuerung nach einem der Ansprüche 14 oder 15, **dadurch gekennzeichnet, dass** zumindest in einem Steuerkanal (6) die Stromstärke gemessen wird, um so den Stellvorgang des Stellelementes (5) zu Überwachen, sodass bei Vorliegen eines Kurzschlusses der betroffene Steuerkanal (6) und/oder der Transformator (21, 11) abgeschaltet werden.

17. Verfahren zur Steuerung von Stellelementen mit einer Mehrkanalsteuerung nach einem der Ansprüche 14 bis 16, **dadurch gekennzeichnet, dass** zumindest in einem Steuerkanal (6) die Stromstärke gemessen wird um festzustellen, ob die Stromstärke des Betriebsstromes des Stellelementes (5) nach einer vorbestimmten Stellzeitdauer einen vorbestimmten Wert aufweist, um so bei einer außerhalb einer vorbestimmten Toleranz liegenden Abweichung den betroffenen Steuerkanal (6) und/oder Transformator (21, 11) abzuschalten.
